## Europäisches Patentamt
## European Patent Office
## Office européen des brevets

(19)

(11) Veröffentlichungsnummer: **0 210 457**
**A1**

(12) **EUROPÄISCHE PATENTANMELDUNG**

(21) Anmeldenummer: **86109005.8**

(22) Anmeldetag: **02.07.86**

(51) Int. Cl.4: **C04B 35/04 , C04B 35/10**

(30) Priorität: **02.08.85 DE 3527790**

(43) Veröffentlichungstag der Anmeldung:
**04.02.87 Patentblatt 87/06**

(84) Benannte Vertragsstaaten:
**AT BE DE FR GB IT NL SE**

(71) Anmelder: **Refratechnik GmbH**
**Rudolf-Winkel-Strasse 1**
**D-3400 Göttingen(DE)**

(72) Erfinder: **Bartha, P., Dr.**
**Greifswaldersrasse 2**
**D-3406 Bovenden(DE)**
Erfinder: **Weibel, Guido, Dipl.-Ing.**
**Kleine Strasse**
**D-3515 Dankelshausen(DE)**

(74) Vertreter: **Goddar, Heinz J., Dr. et al**
**FORRESTER & BOEHMERT**
**Widenmayerstrasse 4/I**
**D-8000 München 22(DE)**

(54) **Spinellbildende Zusammensetzung sowie ihre Verwendung.**

(57) Spinellbildende Zusammensetzung im Dreistoffsystem $MgO-Al_2O_3-Cr_2O_3$, dadurch gekennzeichnet, daß sie im Dreistoffsystem innerhalb der Figur A' - A" -B" -B' liegt, mit

A' = 53 Gew.-% MgO, 44 Gew.-% $Al_2O_3$ und 3 Gew.-% $Cr_2O_3$;

A" = 21 Gew.-% MgO, 76 Gew.-% $Al_2O_3$ und 3 Gew.-% $Cr_2O_3$;

B" = 19,5 Gew.-% MgO, 60,5 Gew.-% $Al_2O_3$ und 20 Gew.-% $Cr_2O_3$;

B' = 49 Gew.-% MgO, 31 Gew.-% $Al_2O_3$ und 20 Gew.-% $Cr_2O_3$

und Verwendung derselben als Zusatz bei Magnesiasteinen.

EP 0 210 457 A1

## Spinellbildende Zusammensetzung sowie ihre Verwendung

Die Erfindung betrifft eine spinellbildende Zusammensetzung im Dreistoffsystem $MgO-Al_2O_3-Cr_2O_3$ sowie ihre Verwendung.

Basische feuerfeste Werkstoffe auf der Grundlage von Magnesiumoxid (MgO) werden bevorzugt als Auskleidungsmaterial von Industrieöfen der Stahl-und Eisenindustrie, der Buntmetallindustrie und der Zement-und Kalkindustrie eingesetzt, wo hohe Temperaturen in Verbindung mit basischem Schlackenangriff auftreten. Als entscheidender Nachteil von Magnesiasteinen wird jedoch die Tatsache angesehen, daß dieser Werkstoff vor allem aufgrund seines hohen Elastizitätsmoduls und seines hohen Ausdehnungskoeffizienten eine geringe Beständigkeit gegenüber schroffen Temperaturwechseln und mechanischen Spannungswechseln aufweist.

Dies geht aus folgender Gleichung hervor:

$$\sigma_D = E_D \cdot \Delta \vartheta \cdot \alpha ,$$

wobei $\sigma_D$ = Druckspannung $[N/mm^2]$

$E_D$ = E-Modul $[kN/mm^2]$

$\Delta\vartheta$ = Temperaturdifferenz $[°C]$

$\alpha$ = Wärmedehnungskoeffizient $[°C^{-1}]$ ist.

Der Elastizitätsmodul reiner Magnesiasteine liegt dabei bei 60 -100 kN/mm². Man hat deshalb bereits frühzeitig versucht, den Elastizitätsmodul MgO-haltiger Werkstoffe systematisch zu senken, was zwar durch die Entwicklung von Magnesiasteinen mit besonderem Körnungsaufbau - (Körnungslüche) in beschränktem Umfang möglich war, jedoch erst entscheidend durch die Zugabe sogenannter TWB (Temperaturwechselbeständigkeit)-verbessernder Stoffe erreicht wurde.

Als besonders wirksam hat sich hierbei die Zugabe von Chromerz erwiesen, das im wesentlichen der allgemeinen Formel (FeO, MgO)•(Cr₂O₃, Al₂O₃, Fe₂O₃) entspricht. Die TWB-verbessernde Wirkung von Chromerz in Magnesiasteinen wird vor allem in einer Gefügeverspannung des Werkstoffes aufgrund unterschiedlicher thermischer Ausdehnungskoeffizienten von MgO und Chromit gesehen, die zu einer Senkung des E-Moduls auf Werte bis zu 25 kN/mm² führt. Die TWB-wirksame Zugabe von Chromerz erfolgt dabei vor allem im Korngrößenbereich von 0,5 -5 mm.

Um eine entscheidende Senkung des E-Moduls und damit eine deutliche Verbesserung der TWB des Magnesiawerkstoffes zu erreichen, müssen Zugaben von mindestens 10 -30 Gew.-% Chromerz in dem beschriebenen Korngrößenbereich erfolgen. Die zur Verbesserung der TWB verwendeten sogenannten refraktären Chromerze weisen die in der nachstehenden Tabelle 1, welche die chemischen Grenzwerte für refraktäre Chromerze zeigt, wiedergegebene Zusammensetzung auf (Jungmeier, H.: Radex-Rundschau, (1984) Nr. 3/4, S. 462-491)

## Tabelle 1

| | | |
|---|---|---|
| $SiO_2$ | 1 - 6 | % |
| CaO | 0,3 - 0,4 | % |
| $Fe_2O_3$ | 13,6 - 29,6 | % |
| $Al_2O_3$ | 8,7 - 28,9 | % |
| $Cr_2O_3$ | 31,8 - 57,4 | % |

Als Nachteil chromerzhaltiger temperaturwechselbständiger MgO-Werkstoffe -Magnesiasteine mit Chromerzzusatz (MgO-Gehalt 80%) und Magnesia-Chomitsteine (MgO-Gehalt 80 -30 %) -hat sich indessen die Tatsache erwiesen, daß Chromerz während des Gebrauchs bei hohen Temperaturen vor allem durch CaO-haltige Stoffe wie z.B. Kalk, Zementklinker und Schlacken angegriffen wird, wobei in oxidierender Ofenatmosphäre kalkhaltige 6-wertige Abbauprodukte des Chroms entstehen. Hierfür gelten folgende vereinfachte Gleichungen:

$$Cr_2^{3+}O_3 + \frac{3}{2} O_2 \rightarrow 2Cr^{6+}O_3 \quad [1]$$

$$Cr^{6+}O_3 + CaO \rightarrow CaCr^{6+}O_4 \quad [2]$$

$CaCr^{6+}O_4$ (Calciumchromat) mit einem Schmelzpunkt von 1230°C ist wasserlöslich und enthält 6-wertiges Chrom, welches toxisch und umweltschädlich ist.

Diesen Nachteil weisen sogenannte Magnesia- oder Periklasspinellsteine nicht auf. Periklasspinellsteine sind Magnesiawerkstoffe, die zur Senkung des E-Moduls und damit zur TWB-Verbesserung an Stelle von Chromerz den Spinell $MgO\bullet Al_2O_3$ enthalten. Dieser kann entweder im Werkstoff während des Brennens "in situ" gebildet werden - (Periklasspinellsteine der 1. Generation) oder als Schmelze und/oder Sinterspinell zugegeben werden (Periklasspinellsteine der 2. Generation) - (Bartha, P.: Zement-Kalk-Gips 35 (1982) Nr. 9, S. 500 -507; Routschka, G.: Giesserei 71 (1984) Nr. 10, S. 1 -7 (Sonderdruck); Bartha, P.: Zement-Kalk-Gips 38 (1985) Nr. 2, S. 96 -99; Zednicek, W.: Radex-Rundschau (1983) Nr. 3, S. 210 -242.

Die Zusammensetzung von im Handel befindlicher $MgO\bullet Al_2O_3$ -Spinelle ist in der nachstehenden Tabelle 2 (Bartha, P.: Zement-Kalk-Gips 38 (1985) Nr. 2, S. 96 -99) wiedergegeben:

## Tabelle 2

### Zusammensetzung handelsüblicher Spinellrohstoffe für die Feuerfestindustrie

| | Sinterspinell | | | Schmelzspinell | Periklasspinell-Co-Klinker |
|---|---|---|---|---|---|
| | 1 | 2 | 3 | 4 | 5 |
| $SiO_2$ | 0,3 | 0,5 | 0,4 | 0,11 | 0,2 |
| $Al_2O_3$ | 73,0 | 69,0 | 65,0 | 69,0 | 50,5 |
| $Fe_2O_3$ | 0,2 | 0,3 | 0,1 | 0,1 | 0,2 |
| CaO | 0,4 | 0,3 | 0,4 | 0,3 | 0,4 |
| MgO | 25 | 29,0 | 31,1 | 30,1 | 48,1 |
| $K_2O$ | 0,01 | 0,01 | 0,001 | 0,01 | 0,01 |
| $Na_2O$ | 0,1 | 0,02 | 0,1 | 0,2 | 0,1 |
| Rohdichte (g/cm³) | 3,2 | 3,2 | 3,3 | 3,47 | 3,3 |

Die $MgO\bullet Al_2O_3$-Spinellanteile in MgO-Steinen liegen heute im Bereich von 10 -30 %. Sie erbringen eine weit wirkungsvollere Erhöhung der TWB, als mit den entsprechenden Anteilen an Chromerz erzielt wird.

Obwohl durch die Substitution von Chromerz durch $MgO\bullet Al_2O_3$-Spinell die Temperaturwechselbeständigkeit wesentlich verbessert werden konnte, was in bestimmten Anwendungsbereichen wie z.B. in der Zementindustrie zu signifikanten Haltbarkeitsverbesserungen geführt hat, besitzt der $MgO$-$Al_2O_3$-Spinell noch Nachteile. So wird auch $MgO\bullet Al_2O_3$-Spinell bei Temperaturen über 1400°C durch CaO und kalkreiche Verbindungen mit einem $CaO/SiO_2$-Verhältnis von >1,87 unter Neubildung von z.T. niedrigschmelzenden Verbindungen wie $CaO.Al_2O_3$ (CA), 12 $CaO.7Al_2O_3$ ($C_{12}A_7$), $3CaO.Al_2O_3$

(C₃A) (Bartha, P.: Zement-Kalk-Gips 35 (1982) Nr. 9, S. 500 -507); (Bartha, P.: Zement-Kalk-Gips 38 (1985) Nr. 2, S. 96 -99) sowie zu Gehlenit - Åkermanit ($C_2AS$ -$C_2MS_2$) abgebaut.

Der Erfindung liegt die Aufgabe zugrunde, eine spinellbildende Zusammensetzung der eingangs genannten Art zu schaffen, durch welche die Reaktionsbeständigkeit des Spinells $MgO.Al_2O_3$ gegenüber CaO und basischen Stoffen mit einem $CaO/SiO_2$-Verhältnis von >1,87 so erhöht ist, daß die Bildung von kalkhaltigen Abbauprodukten stark verzögert und/oder mengenmäßig zurückgedrängt wird, sowie eine bevorzugte Verwendung dieser spinellbildenden Zusammensetzung anzugeben.

Erfindungsgemäß wird die vorgenannte Aufgabe durch eine spinellbildende Zusammensetzung der gattungsgemäßen Art gelöst, welche dadurch gekennzeichnet ist, daß sie im Dreistoffsystem innerhalb der Figur A' -A" -B" -B' liegt, mit A' = 53 Gew.-% MgO, 44 Gew.-% $Al_2O_3$ und 3 Gew.-% $Cr_2O_3$; A" = 21 Gew.-% MgO, 76 Gew.-% $Al_2O_3$ und 3 Gew.-% $Cr_2O_3$; B" -19,5 Gew.-% MgO, 60,5 Gew.-% $Al_2O_3$ und 20 Gew.-" $Cr_2O_3$; B' = 49 Gew.-% MgO, 31 Gew.-% $Al_2O_3$ und 20 Gew.-% $Cr_2O_3$.

Dabei kann vorgesehen sein, daß sie auf der Verbindungslinie A -B mit den Grenzzusammensetzungen A = 28 Gew.-% MgO, 69 Gew.-% .$Al_2O_3$ und 3 Gew.-% $Cr_2O_3$ und B = 26,5 Gew.-% MgO, 43,5 Gew.-% $Al_2O_3$ und 20 Gew.-% $Cr_2O_3$ liegt, wobei in der Fig. A' -A" -B" -B' A auf der Verbindungslinie A -A" und B auf der Verbindungslinie B' -B" liegt.

Ferner kann erfindungsgemäß vorgesehen sein, daß sie durch einen Gehalt von 26 Gew.-% MgO, 58 Gew.-% $Al_2O_3$ und 16 Gew.-% $Cr_2O_3$ gekennzeichnet ist.

Die Erfindung sieht gegebenenfalls auch vor, daß die spinellbildende Zusammensetzung durch eine Gehalt von bis zu 2 Gew.-% üblicher Nebenbestandteile in Form von CaO, $SiO_2$, $Fe_2O_3$, $Mn_2O_3$, $TiO_2$, $Na_2O$, $K_2O$ und/oder $B_2O_3$ gekennzeichnet ist.

Erfindungsgemäß wird weiterhin die Verwendung der spinellbildenden Zusammensetzung nach der Erfindung als TWB-verbessernder Zusatz bei feuerfesten Magnesiasteinen vorgeschlagen.

In Weiterbildung dieser Verwendung schlägt die Erfindung auch vor, daß die spinellbildende Zusammensetzung in unreagiertem Zustand eingesetzt wird.

Auch kann erfindungsgemäß vorgesehen sein, daß die spinellbildende Zusammensetzung in gesintertem Zustand eingesetzt wird.

Auch kann erfindungsgemäß vorgesehen sein, daß die spinellbildende Zusammensetzung in geschmolzenem Zustand eingesetzt wird.

Ferner sieht die Erfindung ebenfalls vor, daß die spinellbildende Zusammensetzung in dem Kornbereich 0,1 -10 mm zugesetzt wird.

Nach der Erfindung kann auch vorgesehen sein, daß die spinellbildende Zusammensetzung in dem Kornbereich 0,5 -4 mm zugesetzt wird.

Die Erfindung sieht gegebenenfalls auch vor, daß das Mischungsverhältnis zwischen der spinellbildenden Zusammensetzung und einer für die Magnesiasteine verwendeten Sintermagnesia zwischen 5 und 95 Gew.-% liegt.

Nach der Erfindung kann auch das Mischungsverhältnis zwischen der spinellbildenden Zusammensetzung und der Sintermagnesia zwischen 5 und 30 Gew.-% liegen.

Erfindungsgemäß wird also eine spinellbildende Zusammensetzung im Dreistoffsystem $MgO$-$Al_2O_3$-$Cr_2O_3$ vorgeschlagen, bei der die Bildung der Abbauprodukte des $MgO.Al_2O_3$-Spinells, bestehend aus CA, $C_{12}A_7$, $C_2A$, $C_2A$, $C_2MS_2$ mengenmäßig verringert wird und keine oder nur untergeordnete Mengen von 6-wertigen Chromverbindungen, wie $CaCrO_4$, $Ca_5Cr_3O_{12}$ und $4CaO.3Al_2O_3.CrO_3$ entstehen. Zwar ist bekannt, daß die Schlackenbeständigkeit von Korund ($Al_2O_3$) durch Zugabe von $Cr_2O_3$ ( im allgemeinen 6 -11 Gew.-%) verbessert werden kann (Routschka, G.: Giesserei 71 (1984) Nr. 10, S. 1 -7 (Sonderdruck); Kiehl, J.P.: Ziegelindustrie·International (1983) Nr. 10, S. 488 -491), doch handelt es sich hierbei um den Angriff hochkieselsäurehaltiger Schlacken mit einem $CaO/SiO_2$-Verhältnis von >1,87. Ein weiterer Unterschied zu der vorliegenden Erfindung besteht in der zitierten Literatur darin, daß das $Cr_2O_3$ in der Matrix des Korundsteines eingesetzt wird und deshalb homogen über das gesamte Steingefüge fein verteilt ist. Im Gegensatz dazu befindet sich das $Cr_2O_3$ bei der Erfindung in der TWB-verbessernden Spinellkomponente und ist im Steingefüge bevorzugt als Korn zwischen 0,1 und 10 mm, bevorzugt zwischen 0,5 und 4 mm, eingebaut, wenn die spinellbildende Zusammensetzung nach der Erfindung in ihrer ganz bevorzugten Anwendungsform zur Herstellung feuerfester Magnesiasteine verwendet wird. Auch dient der mit $Cr_2O_3$ dotierte Korund nicht zur Verbesserung der TWB eines basischen Steines auf der Grundlage von MgO. Die Zusammensetzung des $Cr_2O_3$ dotierten Korunds und Korundsteines liegt auch nicht im Dreistoffsystem $MgO$-$Al_2O_3$-$Cr_2O_3$, sondern im Zweistoffsystem $Al_2O_3$-$Cr_2O_3$ und ist somit auch stofflich und zusammensetzungsmäßig klar von der spinellbildenden Zusammensetzung nach der Erfindung abgegrenzt.

Das gleiche gilt für die bekannten Steine auf der Basis von Picrochromit ($MgO.Cr_2O_3$), einer Verbindung der Spinellgruppe $R^{2+}O.R_2^+O_3$ mit einer theoretischen Zusammensetzung von 79,1 Gew.-% $Cr_2O_3$ und 20,9 Gew.-% MgO (Routschka, G.: Giesserei 71 (1984) Nr. 10, S. 1 -7 (Sonderdruck)sowie seine Verwendung als TWB-Verbesserer in MgO-Steinen (KUROSAKI REFRACT KK J 57007867-EO8 Refractory lining obtd. from magnesiachrome clinker -and 1 or more of magnesia clinker, chromite, picrochromite and chromium oxide, had good spalling resistance; Cornils, B., Hibbel J.u.a.: Radex-Rundschau · (1982) Nr. 1/2, S. 707 -723; Tanimura, Fumikazu: JP 7524309 Basic refractory brick; Furukawa, Kunio, Okamoto, Masaharu: Magnesia-chromium oxide refractories JP 7794310). Die Zusammensetzungen dieses Spinells und der damit hergestellten MgO-Steine liegen im Zweistoffsystem MgO-$Cr_2O_3$ und nicht im Dreistoffsystem MgO-$Al_2O_3$-$Cr_2O_3$. Außerdem oxidiert -auch wie im Chromerz -das 3-wertige Chrom des Picrochromits in oxidierender Atmosphäre zu 6-wertigem Chrom und bildet entsprechend mit CaO und CaO-reichen Stoffen bei hohen Temperaturen $CaCrO_4$ und andere kalkhaltige Verbindungen wie 4 CaO.3$Al_2O_3$.$CrO_3$ und $Ca_5Cr_3O_{12}$. Der Einsatz von Picrochromit und picrochromithaltigen MgO-Steinen ist deshalb auf Ofenaggregaten mit neutraler bis reduzierender Atmosphäre beschränkt wie z.B. Kohlevergasungsanlagen (Kiehl, J.P.: Ziegelindustrie International (1983) Nr. 10, S. 488 -494; Cornils, B., Hibbel, J.u.a.: Radex-Rundschau - (1982) Nr. 1/2, S. 707 -723).

Schließlich ist ein Schmelzspinell-Chromoxid-Stein bekannt, der aus 53 % $Al_2O_3$, 23 % MgO und 22 % $Cr_2O_3$ besteht (Bartha, P.: Zement-Kalk-Gips 38 (1985), Nr. 2, S. 96 -99). Dieser Stein wird als - schlackenbeständige Auskleidung für den unteren Teil von Hochöfen vorgeschlagen. Die Zusammensetzung des Steines liegt im Dreistoffsystem MgO.$Al_2O_3$-$Cr_2O_3$, jedoch außerhalb der beanspruchten Grenzen für vorliegende Erfindung. Außerdem bestand hier nicht die Aufgabe zur Entwicklung eines $Cr_2O_3$-dotierten MgO-$Al_2O_3$-Spinells, der einen MgO-Stein in Form von Partikeln einer Korngröße von 0,1 -10 mm, bevorzugt 0,5 -4 mm zur TWB-Verbesserung eingebaut wird, sondern es handelt sich um einen Gesamtstein der angegebenen Zusammensetzung, der aufgrund seines homogenen, monomodalen Aufbaus eine schlechte TWB aufweisen muß. Auch liegt das CaO/$SiO_2$ - Verhältnis von Hochofenschlacken nicht über 1,87 sondern im Bereich von 0,9 -1,4, wobei keine kalkhaltigen Reaktionsprodukte zwischen Schlacke und Spinell gebildet werden.

Demegegenüber fungiert die erfindungsgemäße spinellbildende Zusammensetzung als TWB-verbessernde Komponente in MgO-Steine, wobei überraschenderweise erfindungsgemäß eine Zusammensetzung bzw. ein Zusammensetzungsbereich gefunden wurde, in dem die Bildung der kalkhaltigen Abbauprodukte des MgO.$Al_2O_3$-Spinells (CA, $C_{12}A_7$, $c_3A$, Gehlenit, Åkermanit) mit Stoffen mit einem CaO/$SiO_2$-Verhältnis von >1,87 stark zurückgedrängt wird, ohne daß die unerwünschten kalkhaltigen Verbindungen des 6-wertigen Chroms ($CaCrO_4$, $Ca_5Cr_{12}$, 4CaO.3$Al_2O_3$.$CrO_3$) gebildet werden.

Weitere Merkmale und Vorteile der Erfindung ergeben sich aus der nachstehenden Beschreibung, in der Beispiele anhand der Zeichnung im einzelnen erläutert sind. Dabei zeigt:

Fig. 1 die Lage der erfindungsgemäßen spinellbildenden Zusammensetzung im Dreistoffsystem MgO-$Al_2O_3$-$Cr_2O_3$;

Fig. 2 die Menge an neu gebildeten Phasen bei Verwendung der erfindungsgemäßen spinellbildenden Zusammensetzung für feuerfeste Magnesiasteine bei Angriff durch CaO und Klinder von Portlandzement und sulfatbeständigem Zement;

Fig. 3 die Menge an neu gebildeten Phasen bei einem Magnesiaspinellstein, bestehend aus 20 Gew.-% der erfindungsgemäßen spinellbildenden Zusammensetzung und 80 Gew.-% einer synthetischen Sintermagnesia (98 Gew.-% MgO) bei Angriff wie in Fig. 2;

Fig. 4 die Infiltrationstiefe der Klinkerschmelzen in die Magnesiaspinellsteine.

Es wurden Mischspinelle aus technisch reinen und in der Feuerfestindustrie üblichen Oxiden des MgO, $Al_2O_3$ und $Cr_2O_3$ unter Kompaktieren und Sintern in der Weise synthetisiert, daß polykristalline Spinell-Picrochromit-Mischkristallkörper entstanden. Dabei bilden der reine Spinell (MgO.$Al_2O_3$) und der reine Picrochromit (MgO.$Cr_2O_3$) die binären Endglieder.

Sowohl die binären, als auch die ternären Spinelle wurden anschließend in oxidierenden Ofenatmosphäre bei 1450°C dem direkten Kontakt mit CaO und Klinker von Portland-und sulfatbeständigem Zement in jeweils getrennten Versuchs reihen ausgesetzt. Die Kontaktzonen der Versuchskörper wurden anschließend quantitativ auf Phasenneubildungen untersucht.

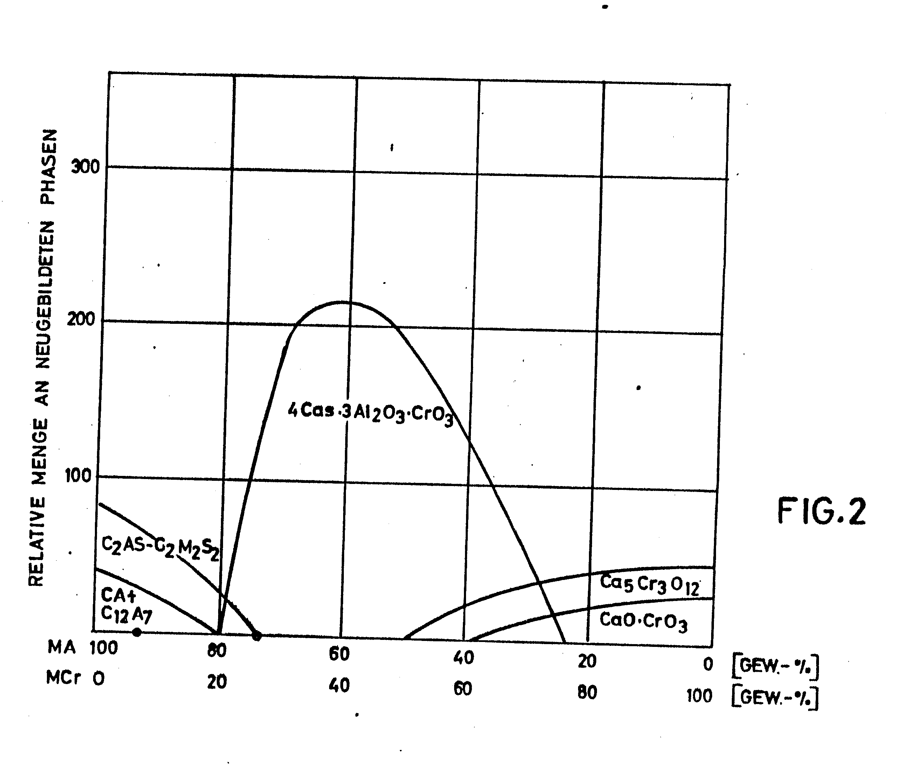

Dabei wurde gefunden, daß sich die Menge der gebildeten Phasen CA, $C_{12}A_7$, Gehlenit und Åkermanit mit steigendem $Cr_2O_3$-Anteil signifikant verringert und bei 20 Gew.-% $Cr_2O_3$, 53,7 Gew.-% $Al_2O_3$ und 26,5 Gew.-% MgO gegen Null geht, und die Menge an der kalkhaltigen Chromatphase mit 6-wertigem Chrom der Zusammensetzung 4CaO.3$Al_2O_3$.$CrO_3$ noch sehr gering ist (siehe Fig. 2).

Bei einer Zusammensetzung von 16 Gew.-% $Cr_2O_3$, 58 Gew.-% $Al_2O_3$, 26 Gew.-% MgO liegt das Minimum der Bildung der Calciumaluminate CA und $C_{12}A_7$ und von 4CaO-3$Al_2O_3$.$CrO_3$, weshalb dies die bevorzugte Zusammensetzung der Erfindung ist.

Die untere Grenze von 3 Gew.-% wurde gewählt, weil von dieser Zusammensetzung ab eine signifikante Verringerung der Phasenneubildungen eintritt.

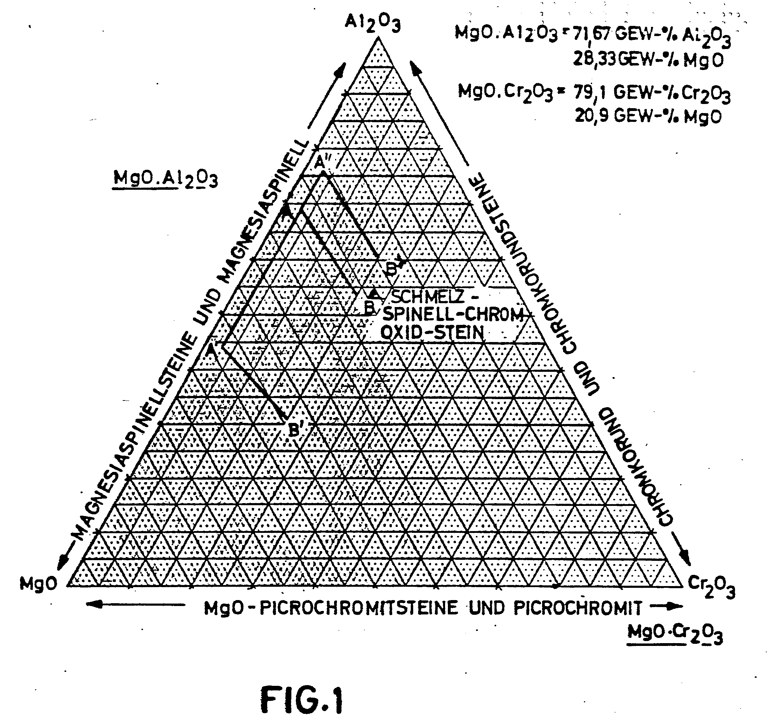

Aus diesem überraschenden Ergebnis ergibt sich unter Zugrundelegung der Aufgabenstellung, daß die bevorzugte spinell, bildende Zusammensetzung auf der Verbindungslinie A-B mit den Grenzzusammensetzungen A = 28 % MgO; 69 Gew.-% $Al_2O_3$ und 3 Gew.-% $Cr_2O_3$ und B = 26,5 Gew.-% MgO: 53,5 Gew.-% $Al_2O_3$ und 20 Gew.-% $Cr_2O_3$ liegt (siehe Fig. 1).

Eine Ausweitung des Zusammensetzungsanspruchs auf das Gebiet A' -A" -B" -B' ergibt sich aus der Tatsache, daß die erfindungsgemäße spindellbildende Zusammensetzung auf der Verbindungslinie A -B jeweils bis max. 25% MgO oder 25 % $Al_2O_3$ im Überschuß aufweisen kann, ohne daß die TWB-verbessernde Wirkung verloren geht oder sich die Reaktionsbeständigkeit gegenüber CaO und CaO-reichen Stoffen mit einem $CaO/SiO_2$-Verhältnis von >1,87 verringert.

Es liegt weiterhin im Rahmen der Erfindung, daß die spinellbildende Zusammensetzung bis zu 2 % Nebenbestandteile aus der Gruppe CaO, $SiO_2$, $Fe_2O_3$, $Mn_2O_3$, $TiO_2$, $K_2O$, $Na_2O_3$ und $B_2O_3$ enthalten kann.

In einem weiteren Bereich wurden die ternären Spinellmischungen mit den binären Endgliedern in einen Anteil von jeweils 20 Gew.-% mit 80 Gew.-% eines synthetischen Magnesiasinters mit einer Zusammensetzung von 98,0 % MgO, 1 % CaO, 0,3 % $SiO_2$, 0,2 % $Al_2O_3$ und 0,5 % $Fe_2O_3$ zu Formkörpern verpreßt und bei 1600°C gebrannt. Dies entspricht einer typischen Zusammensetzung eines hochwertigen temperaturwechselbeständigen Steintyps auf der Basis von MgO, wie er z.B. in der Brennzone von Zementdrehöfen eingesetzt wird.

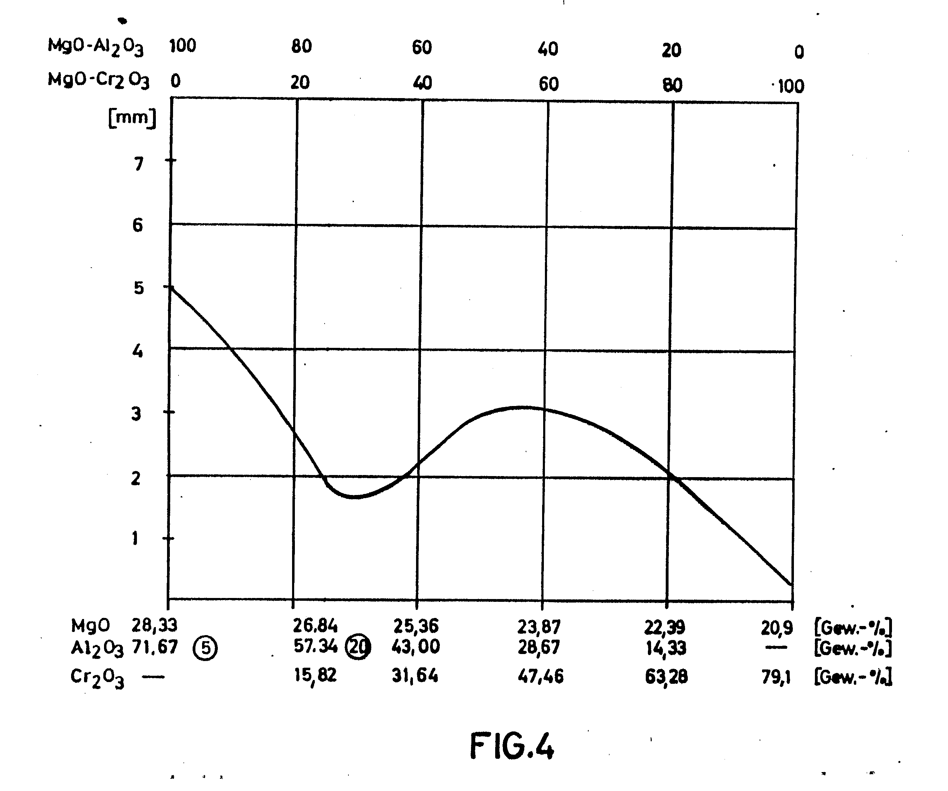

Die gebrannten Magnesia-Spinellsteinkörper wurden wiederum bei einer Temperatur von 1450°C dem Kontakt von CaO und Klinker von Portlandzement und sulfatbeständigem Zement ausgesetzt. Die Versuchskörper wurden anschließend quantitativ auf Phasenneubildungen untersucht. Außerdem wurde die Infiltrationstiefe der Klinkerschmelzen in die Magnesia-spinellsteinkörper ermittelt (Fig. 4).

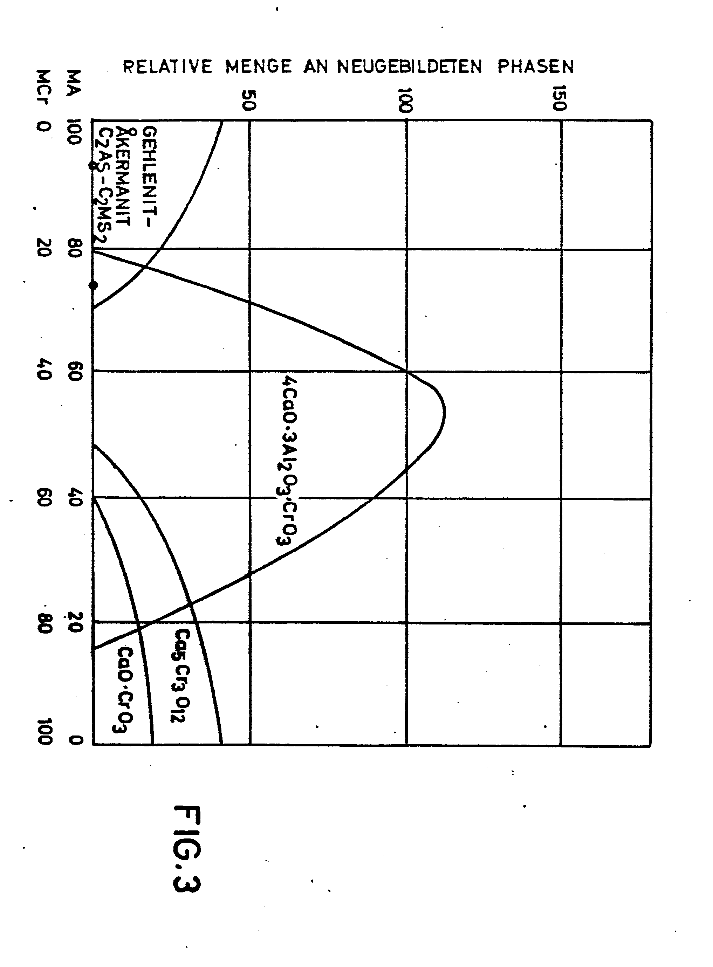

Die Ergebnisse der Versuche bestätigen, daß die Wirkung der erfindungsgemäßen Spinellzusammensetzung in einem Magnesiaspinellstein 2. Generation mit einem üblichen Zusatz von bis zu 20 Gew.-% grundsätzlich dieselbe ist (Fig. 3).

Fig. 4 zeigt weiterhin, daß sich die Infiltrationstiefe der Klinkerschmelzen in den Stein im erfindungsgemäßen Zusammensetzungsbereich signifikant verringert.

Es liegt im Rahmen der Erfindung, daß die beanspruchte spinellbildende Zusammensetzung zur Verbesserung der TWB von MgO-Steinen sowohl "in situ" während des Steinbrandes gebildet, als auch in vorsynthetisierter Form als Sinter- und Schmelzspinell eingesetzt wird.

Die Einsatzmengen liegen in den üblichen Bereichen von 5 -95 Gew.-% Spinell der erfindungsgemäßen Zusammensetzung und 95 -5 Gew.-% Sintermagnesia, bevorzugt bei 5 -30 Gew.-% Spinell der erfindungsgemäßen Zusammensetzung. Auch kann der Spinell der erfindungsgemäßen Zusammensetzung mit anderen bekannten TWB-Verbesserern kombiniert werden, soweit dies vorteilhaft ist. Der Spinell der erfindungsgemäßen Zusammensetzung wird dabei zur TWB-Verbesserung in der Korngröße von 0,1 -10 mm, bevorzugt von 0,5 -4 mm, eingesetzt.

Die mit dem Spinell der erfindungsgemäßen Zusammensetzung erzeugten MgO-Steine werden überall dort vorteilhaft eingesetzt, wo hohe Temperaturen in Verbindung mit Temperaturwechsel, mechanische Spannungen und Angriffe von Stoffen mit einem $CaO/SiO_2$-Verhältnis von >1,87 auftreten, vorzugsweise in der Brennzone von Kalk-und Zementöfen.

Tabelle 3

Grenzzusammensetzungen der beanspruchten spinellbildenden Zusammensetzungen

| Gew.-% | MgO | $Al_2O_3$ | $Cr_2O_3$ |
|---|---|---|---|
| A | 28 | 69 | 3 |
| B | 26,5 | 53,5 | 20 |
| A' | 53 | 44 | 3 |
| B' | 49 | 31,0 | 20 |
| A" | 21 | 76 | 3 |
| B" | 19,5 | 60,5 | 20 |
| bevorzugt | 26,0 | 58 | 16 |

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

## Ansprüche

1. Spinellbildende Zusammensetzung im Dreistoffsystem $MgO$-$Al_2O_3$-$Cr_2O_3$, dadurch gekennzeichnet, daß sie im Dreistoffsystem innerhalb der Figur A' -A" -B" -B' liegt, mit

A' = 53 Gew.-% MgO, 44 Gew.-% $Al_2O_3$ und 3 Gew.-% $Cr_2O_3$;

A" = 21 Gew.-% MgO, 76 Gew.-% $Al_2O_3$ und 3 Gew.-% $Cr_2O_3$;

B" = 19,5 Gew.-% MgO, 60,5 Gew.-% $Al_2O_3$ und 20 Gew.-% $Cr_2O_3$;

B' = 49 Gew.-% MgO, 31 Gew.-% $Al_2O_3$ und 20 Gew.-% $Cr_2O_3$.

2. Spinellbildende Zusammensetzung nach Anspruch 1, dadurch gekennzeichnet, daß sie auf der Verbindungslinie A -B mit den Grenzzusammensetzungen A = 28 Gew.-% MgO, 69 Gew.-% $Al_2O_3$ und 3 Gew.-% $Cr_2O_3$ und B = 26,5 Gew.-% MgO, 43,5 Gew.-% $Al_2O_3$ und 20 Gew.-% $Cr_2O_3$ liegt, wobei in der Fig. A' -A" -B" -B' A auf der Verbindungslinie A' -A" und B auf der Verbindungslinie B' -B" liegt.

3. Spinellbildende Zusammensetzung nach Anspruch 2, gekennzeichnet durch einen Gehalt von 26 Gew.-% MgO, 58 Gew.-% $Al_2O_3$ und 16 Gew.-% $Cr_2O_3$.

4. Spinellbildende Zusammensetzung nach einem der vorangehenden Ansprüche, gekennzeichnet durch einen Gehalt von bis zu 2 Gew.-% üblicher Nebenbestandteile in Form von $CaO$, $SiO_2$, $Fe_2O_3$, $Mn_2O_3$, $TiO_2$, $Na_2O$, $K_2O$ und/oder $B_2O_3$.

5. Verwendung der spinellbildenden Zusammensetzung nach einem der vorangehenden Ansprüche als TWB-verbessernder Zusatz bei feuerfesten Magnesiasteinen.

6. Verwendung nach Anspruch 5, dadurch gekennzeichnet, daß die spinellbildende Zusammensetzung in unreagiertem Zustand eingesetzt wird.

7.Verwendung nach Anspruch 5, dadurch gekennzeichnet, daß die spinellbildende Zusammensetzung in gesintertem Zustand eingesetzt wird.

8. Verwendung nach Anspruch 5, dadurch gekenzeichnet, daß die spinellbildende Zusammensetzung in geschmolzenem Zustand eingesetzt wird.

9. Verwendung nach einem der Ansprüche 5 bis 8, dadurch gekennzeichnet, daß die spinellbildende Zusammensetzung in dem Kornbereich 0,1 - 10 mm zugesetzt wird.

10. Verwendung nach Anspruch 9, dadurch gekennzeichnet, daß die spinellbildende Zusammensetzung in dem Kornbereich 0,5 -4 mm zugesetzt wird.

11. Verwendung nach einem der Ansprüche 5 bis 9, dadurch gekennzeichnet, daß das Mischungsverhältnis zwischen der spinellbildenden Zusammensetzung und einer für die Magnesiasteine verwendeten Sintermagnesia zwischen 5 und 95 Gew.-% liegt.

12. Verwendung nach Anspruch 11, dadurch gekennzeichnet, daß das Mischungsverhältnis zwischen der spinellbildenden Zusammensetzung und der Sintermagnesia zwischen 5 und 30 Gew.-% liegt.

FIG.1

FIG.2

Axis label (vertical): RELATIVE MENGE AN NEUGEBILDETEN PHASEN

Curve labels:
- $4\,CaS \cdot 3\,Al_2O_3 \cdot CrO_3$
- $C_2AS \cdot C_2M_2S_2$
- $CA + C_{12}A_7$
- $Ca_5Cr_3O_{12}$
- $CaO \cdot CrO_3$

X-axis:
MA    100   80   60   40   20   0   [GEW.-%]
MCr O        20   40   60   80   100 [GEW.-%]

Y-axis: 100, 200, 300

0 210 457

FIG.3

0 210 457

| MgO-Al$_2$O$_3$ | 100 | 80 | 60 | 40 | 20 | 0 |
|---|---|---|---|---|---|---|
| MgO-Cr$_2$O$_3$ | 0 | 20 | 40 | 60 | 80 | ·100 |

[mm]

| MgO | 28,33 | | 26,84 | | 25,36 | | 23,87 | 22,39 | 20,9 | [Gew.-%] |
|---|---|---|---|---|---|---|---|---|---|---|
| Al$_2$O$_3$ | 71,67 | ⑤ | 57.34 | ⑳ | 43,00 | | 28,67 | 14,33 | — | [Gew.-%] |
| Cr$_2$O$_3$ | — | | 15,82 | | 31,64 | | 47,46 | 63,28 | 79,1 | [Gew.-%] |

# FIG.4

| | EINSCHLÄGIGE DOKUMENTE | | EP 86109005.8 | |
|---|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) | |
| X | GB - A - 1 496 356 (STEETLEY MINERALS LIMITED)  <br> * Ansprüche * | 1,4, 6-10 | C 04 B 35/04  <br> C 04 B 35/10 | |
| X | SU - A - 1 047 878 (DNEPROPETROWSKI METALLURGITSCHESKI INSTITUT)  <br> * Gesamt * | 1,4, 6-10 | | |
| A | DE - A1 - 2 601 446 (VEITSCHER MAGNESITWERKE-AG)  <br> * Ansprüche; Seite 3, Tabelle * | 1,4,11, 12 | | |
| A | US - A - 4 107 255 (CLISHEM et al.)  <br> * Ansprüche * | 1,4,11, 12 | | |
| D,A | ZEMENT-KALK-GIPS, 35. Jahrgang, Nr. 9, September 1982, Wiesbaden  <br> P. BARTHA "Direktgebundene Periklasspinellsteine und ihr Einsatz in der Zementindustrie" Seiten 500-507 | 1 | RECHERCHIERTE SACHGEBIETE (Int. Cl.4)  <br> C 04 B | |

Der vorliegende Recherchenbericht wurde für alle Patentansprüche erstellt.

| Recherchenort | Abschlußdatum der Recherche | Prüfer |
|---|---|---|
| WIEN | 06-11-1986 | BECK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82